# FASCICULE DE BREVET EUROPEEN

(11) **EP 2 818 084 B1**
(45) Date de publication et mention de la délivrance du brevet: **30.12.2015**
(21) Numéro de dépôt: 14171431.1
(22) Date de dépôt: 06.06.2014
(51) Int. Cl.: A47J 27/21

(54) **Bouilloire munie d'un ensemble filtre et clapet anti-poussière amovible**
Wasserkocher, der mit einer abnehmbaren Staubfilter- und Klappe ausgestattet ist
Kettle provided with a removable dust flap and filter assembly

(30) Priorité: 14.06.2013 FR 1355575
(43) Date de publication de la demande: 31.12.2014
(73) Titulaire: SEB S.A., 69130 Ecully (FR)
(72) Inventeur: Lin, Wen Qiang, 21120 IS SUR TILLE (FR); Saint-Hubert, Xavier, 21120 IS SUR TILLE (FR); Lubowicki, Jean-Pierre, 53470 COMMER (FR); Petit, Pierre-Loïc, 59000 LILLE (FR)
(74) Mandataire: Bourrières, Patrice

(56) Documents cités:
- GB-A- 443 353
- GB-A- 2 279 233
- GB-A- 2 392 373

## Description

La présente invention concerne le domaine des appareils destinés à chauffer de l'eau pour un usage domestique, et tout particulièrement une bouilloire électrique.

Une telle bouilloire électrique est généralement composée d'un corps permettant de contenir de l'eau, le corps étant muni d'une ouverture configurée pour verser l'eau hors du corps et d'un bec verseur configuré pour prolonger l'ouverture vers l'extérieur du corps en sorte de faciliter le versement de cette eau. Le corps comprend également une poignée pour sa manipulation et une ouverture principale agencée en partie supérieure dudit corps pour son emplissage en eau. La bouilloire comprend également un couvercle qui est configuré pour fermer cette ouverture principale sur le corps et, un socle d'alimentation électrique sur lequel s'embroche le corps qui comprend également des moyens électriques de chauffe de l'eau contenu dans ledit corps.

Il est connu des bouilloires électriques équipées d'un filtre qui est logé dans le bec verseur, devant l'ouverture. Un tel filtre a pour fonction, d'une part, de filtrer le calcaire qui se forme pendant le cycle de chauffe dans l'eau, lors du versement de l'eau ; d'autre part, ce filtre permet d'éviter les projections d'eau bouillante pendant son ébullition. A titre d'exemple, une telle bouilloire est décrite dans la demande de brevet FR 2671447, dans le brevet US 5672274 A et dans le modèle d'utilité CN 201683717 U. Dans ces documents, le filtre est logé de manière amovible sur un support de filtre qui est agencé sur le corps, devant l'ouverture et dans le fond du bec verseur. Le retrait du filtre hors du support de filtre permet son nettoyage.

Un autre example de bouilloire est décrit dans le brevet GB 2392373. Dans le document CN 201683717 U, la bouilloire comprend également un clapet qui est monté en liaison pivot sur le support de filtre pour pivoter dans une position d'ouverture lors du versement de la bouilloire, en sorte de permettre le versement de l'eau chaude, à une position de fermeture lorsque le corps est redressé et, par exemple, positionné sur le socle d'alimentation électrique ou une surface plane. Un système équipé d'une bille agit par gravité sur le clapet lors du versement du corps en sorte de forcer son ouverture. Un tel clapet a pour fonction d'empêcher la poussière de pénétrer par le bec verseur, à l'intérieur du corps de la bouilloire. Ce clapet permet également de réduire l'échappement de vapeur par le bec verseur durant le cycle de chauffe, notamment quand l'eau est proche de l'ébullition.

Selon les us et coutumes, certains utilisateurs effectuent le remplissage en eau de la bouilloire en retirant le couvercle et en insérant l'eau par l'ouverture principale. Au contraire, d'autres utilisateurs effectuent le remplissage en eau de la bouilloire en insérant l'eau directement par le bec verseur, sans ouvrir le couvercle pour libérer l'ouverture principale du corps. Une telle bouilloire équipée d'un clapet, tel que décrit dans le document CN 201683717 U, peut être appréciée de certains utilisateurs, voire pour certains marchés ou pays, par exemple où les consommateurs sont culturellement sensibles à l'hygiène ou la protection contre la poussière. Au contraire, une telle bouilloire avec un clapet peut s'avérer gênante pour d'autres utilisateurs préférant remplir la bouilloire directement par le bec verseur, puisque le clapet referme systématiquement le bec verseur une fois le corps redressé.

La présente invention a pour objet de pallier cet inconvénient majeur et présente de nombreux avantages en comparaison des bouilloires connues de l'homme du métier. A cet effet, l'invention concerne une bouilloire électrique qui, de manière connue, comprend un corps muni d'une ouverture configurée pour au moins verser de l'eau hors du corps et d'un bec verseur configuré pour prolonger l'ouverture vers l'extérieur du corps et faciliter le versement de l'eau. La bouilloire comprend également un support de filtre agencé au niveau de l'ouverture et un filtre amovible pouvant être positionné devant l'ouverture. De manière remarquable, selon l'invention, la bouilloire comprend un clapet agencé sur le filtre. En outre, des moyens de liaison sont agencés entre le clapet et le filtre. Ces moyens de liaison sont configurés pour permettre le déplacement du clapet par rapport au filtre entre une position d'ouverture du bec verseur et une position de fermeture du bec verseur et, réciproquement, entre une position de fermeture du bec verseur et une position d'ouverture du bec verseur.

Ainsi, la conception de la bouilloire selon l'invention permet de pouvoir équiper ladite bouilloire soit d'un filtre avec un clapet soit d'un filtre seul, sans clapet, ledit filtre étant rapporté sur le support de filtre lors de sa mise en place dans le bec verseur. Cela permet avantageusement de laisser le choix à l'utilisateur d'adapter la bouilloire selon ses us et coutumes. Cela évite en outre les contraintes importantes d'adaptation du design et de l'outil industriel pour la conception du corps de la bouilloire sur lequel vient se fixer le filtre, par le biais du support de filtre, en fonction des marchés ou des us et coutumes de chaque pays.

Cette conception facilite en outre le retrait du clapet avec le filtre, qui peut ainsi être nettoyé en même temps que le filtre.

Par ailleurs, cette conception permet de concevoir des bouilloires équipées d'un tel clapet, dans tout type de matière, plastique ou métallique, sans contrainte. En effet, il est industriellement difficile d'intégrer un clapet anti-poussière dans un corps de bouilloire métallique avec les constructions de l'art antérieur, du fait que la liaison ou l'articulation du clapet s'effectue directement sur le corps sur les bouilloires traditionnelles. La mise en oeuvre de la liaison entre le clapet et le filtre amovible, telle que prévue selon la présente invention, pallie cet inconvénient.

Selon la bouilloire objet de l'invention, des moyens d'assemblage amovibles sont agencés entre le support de filtre et le filtre. Cela permet de retirer le filtre et le clapet vis-à-vis du support pour faciliter leur nettoyage.

Dans une conception préférentielle de la bouilloire objet de l'invention, une liaison pivot est agencée entre le clapet et le filtre et est configurée pour pivoter le clapet par rapport au filtre dans la position d'ouverture du bec verseur et, réciproquement, dans la position de fermeture du bec verseur. Cette conception facilite l'ouverture du clapet sous la force exercée par l'eau sur la face inférieure dudit clapet, lors de l'inclinaison du corps de la bouilloire pour le versement de l'eau et, inversement, la fermeture du clapet sous l'action de la gravité lorsque le corps de la bouilloire est redressé pour être posé sur une surface plane ou sur le socle d'alimentation électrique. On pourrait envisager d'autres liaisons entre le clapet et le filtre qui permettraient également d'ouvrir et de fermer le bec verseur.

Dans un premier mode de réalisation de la bouilloire objet de l'invention, le support de filtre comporte une paroi ajourée qui est intégrée au corps et disposée au niveau de l'ouverture. Cela permet la conception du corps et du support de filtre en un seul bloc, dans une matière plastique.

Selon ce premier mode de réalisation de la bouilloire objet de l'invention, les moyens d'assemblage amovibles entre le support de filtre et le filtre comprennent des encoches agencées en partie supérieure de la paroi ajourée et des pattes de fixation agencées sur le filtre. Ces pattes de fixation sont configurées pour s'enclencher dans les encoches lorsque le filtre est positionné dans le bec verseur et plaqué contre ladite paroi ajourée et, inversement, pour se déclencher des encoches lorsque le filtre est extrait du bec verseur. Cette conception permet une mise en place et un retrait du filtre, de manière aisée, en saisissant directement le filtre à l'intérieur du bec verseur.

Selon un second mode de réalisation de la bouilloire objet de l'invention, le bec verseur comprend un bord intérieur délimitant l'ouverture. En outre, un système d'assemblage est agencé entre le bord intérieur et le support de filtre. Cela permet l'agencement du support de filtre sur un corps métallique au moyen du système d'assemblage qui est rapporté sur le corps. Cela n'exclut toutefois pas la mise en oeuvre d'un tel système d'assemblage avec un corps en matière plastique.

De manière préférentielle, selon ce second mode de réalisation de la bouilloire, le système d'assemblage comprend une barre de maintien qui est fixée transversalement en partie supérieure du bord intérieur du bec verseur. En outre, une pièce de maintien est fixée en partie inférieure dudit bord intérieur. Par ailleurs, des pattes de fixation sont agencées en partie supérieure et en partie inférieure du support de filtre et sont configurées pour s'engager respectivement sur la barre de maintien et sur la pièce de maintien. Cette conception facilite la mise en place du support de filtre sur le corps de la bouilloire.

Dans une réalisation de la bouilloire objet de l'invention, notamment pour le second mode de réalisation précité où le support de filtre est rapporté sur le corps de la bouilloire, les moyens d'assemblage amovibles comprennent des encoches agencées sur le support de filtre et des pattes de fixation agencées sur le filtre. Les pattes de fixation sont configurées pour s'enclencher dans les encoches lorsque le filtre est positionné dans le bec verseur et plaqué contre ledit support de filtre et, inversement, pour se dégager des encoches lorsque le filtre est extrait du bec verseur. Cela facilite également la manipulation du filtre pour sa mise en place et son retrait, en le saisissant directement depuis le bec verseur.

Dans une réalisation préférentielle de la bouilloire objet de l'invention, la liaison pivot entre le clapet et le filtre comprend deux pattes agencées sur le filtre et deux bras incurvés agencés sur le clapet. Les pattes comprennent chacune un orifice et les extrémités des bras incurvés comprennent chacune un plot configuré pour s'engager dans leur orifice respectif. Des variantes sont envisageables, notamment l'inversion des plots et des orifices sur les bras et les pattes.

Selon la bouilloire objet de l'invention, celle-ci comprend des premiers moyens de butée agencés entre le clapet et le filtre. Ces premiers moyens de butée sont configurés pour arrêter la position de fermeture du clapet vis-à-vis du bec verseur. Cela permet de définir précisément la position de fermeture du clapet sur le bec verseur en sorte de réduire de manière optimale l'échappement de vapeur par ledit bec verseur.

Selon la bouilloire objet de l'invention, celle-ci comprend des seconds moyens de butée agencés entre le clapet et le filtre. Ces seconds moyens de butée sont configurés pour limiter l'angle d'ouverture entre le clapet et le bec verseur. De manière préférentielle, la liaison pivot permet un angle d'ouverture entre le clapet et le bec verseur qui est limité à une valeur comprise entre 60° et 85°. Cela permet en outre de lever suffisamment le clapet pour effectuer tout de même le remplissage de la bouilloire par le bec verseur, lorsque cet utilisateur souhaite équiper la bouilloire d'un clapet afin de se prémunir contre la poussière tout en conservant la possibilité de remplir cette bouilloire directement depuis le bec verseur, en soulevant le clapet.

Selon une variante de réalisation de la bouilloire objet de l'invention, celle-ci comprend des moyens de blocage agencés entre le clapet et le filtre. Ces moyens de blocage sont configurés pour maintenir le clapet en position d'ouverture maximale après versement du corps. De manière préférentielle, selon cette variante de réalisation, les moyens de blocage comprennent, d'une part, des nervures agencées sur des bras incurvés du clapet et, d'autre part, un bord du filtre. Les nervures sont configurées pour passer un «point dur» causé par l'interférence ou le contact de ces nervures sur le bord du filtre en fin d'ouverture du clapet puis, pour rester bloquées sur ledit bord du filtre. Le déblocage du clapet est réalisé ensuite manuellement en appliquant une force sur le clapet dans le sens de fermeture. Ainsi le clapet reste en position ouverte et ne se referme que si l'utilisateur le rabat. Cette conception est tout particulièrement intéressante pour les utilisateurs ou consommateurs qui souhaitent à la fois disposer d'un clapet anti-poussière et pouvoir remplir la bouilloire par le bec verseur.

Dans une variante de réalisation de la bouilloire objet de l'invention, celle-ci comprend des moyens de dégagement qui sont agencés entre le filtre et le support de filtre. Ces moyens de dégagement sont configurés pour saisir le filtre en position sur le support de filtre en sorte de faciliter son extraction hors du bec verseur. Ainsi l'utilisateur peut saisir et retirer aisément le filtre du support en sorte de le dégager du bec verseur.

Selon cette variante de réalisation de la bouilloire, celle-ci comprend un couvercle d'ouverture/de fermeture d'une ouverture principale agencée en partie supérieure du corps. En outre, les moyens de dégagement sont agencés pour être inaccessibles lorsque le couvercle est fermé. Cela évite tout retrait du filtre durant la chauffe de l'eau ou l'utilisation de la bouilloire. En effet, l'utilisateur doit préalablement ouvrir le couvercle de la bouilloire pour retirer le filtre et le clapet en saisissant ledit filtre par les moyens de dégagement; l'ouverture du couvercle permet alors à l'utilisateur de détecter si de la vapeur d'eau chaude se dégage du corps, ce qui évite que l'utilisateur retire ledit filtre en présence de vapeur qui risquerait de le brûler.

Dans une autre variante de réalisation de la bouilloire objet de l'invention, les moyens de liaison entre le clapet et le filtre sont configurés pour assembler de manière amovible ledit clapet sur ledit filtre. Dans une réalisation préférentielle où la liaison pivot telle que précitée est mise en oeuvre entre des bras incurvés sur le clapet et des pattes sur le filtre, lesdits bras incurvés sur le clapet sont configurés pour être suffisamment flexibles en sorte de permettre le dégagement des plots hors des orifices.

Une telle conception des moyens de liaison permet d'avoir un seul filtre pouvant recevoir ou non un clapet, ce qui évite d'avoir à la fois un filtre seul, sans clapet, et un filtre équipé d'un clapet en sorte de pouvoir laisser le choix à l'utilisateur d'équiper ou non la bouilloire d'un tel clapet anti-poussière. Une telle conception est particulièrement intéressante et utile pour des versions de bouilloire en métal avec la peinture sur le couvercle. En fait, ces moyens de liaison agencés entre le bec verseur et le couvercle permettent d'éviter tout contact entre l'eau et le couvercle dont la peinture peut être non alimentaire lors du versage.

L'invention concerne également un ensemble constitué d'une bouilloire objet de l'invention présentant l'une ou l'autre des caractéristiques précitées. Cet ensemble comprend, outre le filtre équipé d'un clapet, un second filtre, sans clapet, configuré également pour être assemblé de manière amovible sur le support de filtre. Cela permet à l'utilisateur de disposer des deux types de filtre, avec ou sans clapet, et de pouvoir choisir à sa guise, selon ses us et coutumes, d'utiliser ou non un clapet anti-poussière.

La description suivante met en évidence les caractéristiques et avantages de la bouilloire objet de la présente invention. Cette description s'appuie sur des figures, parmi lesquelles :
- Les figures 1 et 2 illustrent deux vues tridimensionnelles d'un premier mode de réalisation de la bouilloire ;
- La figure 3 illustre une vue partielle tridimensionnelle de la bouilloire des figures 1 et 2, mettant en évidence le bec verseur et le support de filtre intégré au corps de ladite bouilloire ;
- La figure 4 illustre le filtre et le clapet assemblés ensemble, en vue tridimensionnelle, selon un première angle de vue ;
- La figure 5 illustre le filtre et le clapet en vue tridimensionnelle éclatée, selon un second angle de vue ;
- La figure 6 illustre une vue tridimensionnelle du clapet mettant en évidence des nervures sur les bras incurvés dudit clapet ;
- Les figures 7 et 8 illustrent deux vues tridimensionnelles partielles d'un second mode de réalisation de la bouilloire selon laquelle le support de filtre est rapporté sur le corps.

Dans la suite de la description, les mêmes références seront utilisées pour définir les mêmes caractéristiques sur chacune des variantes de réalisation.

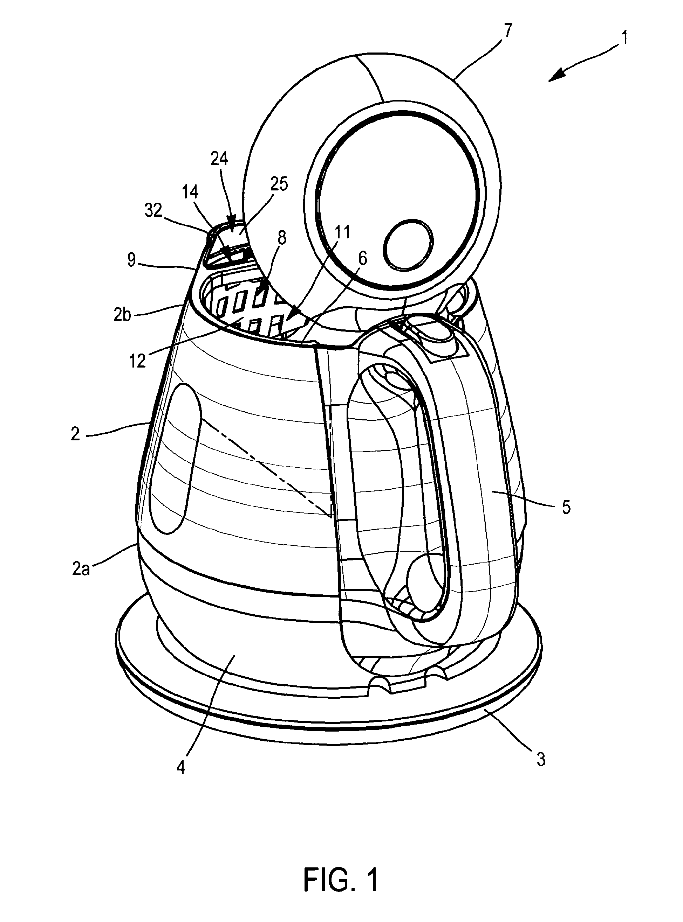

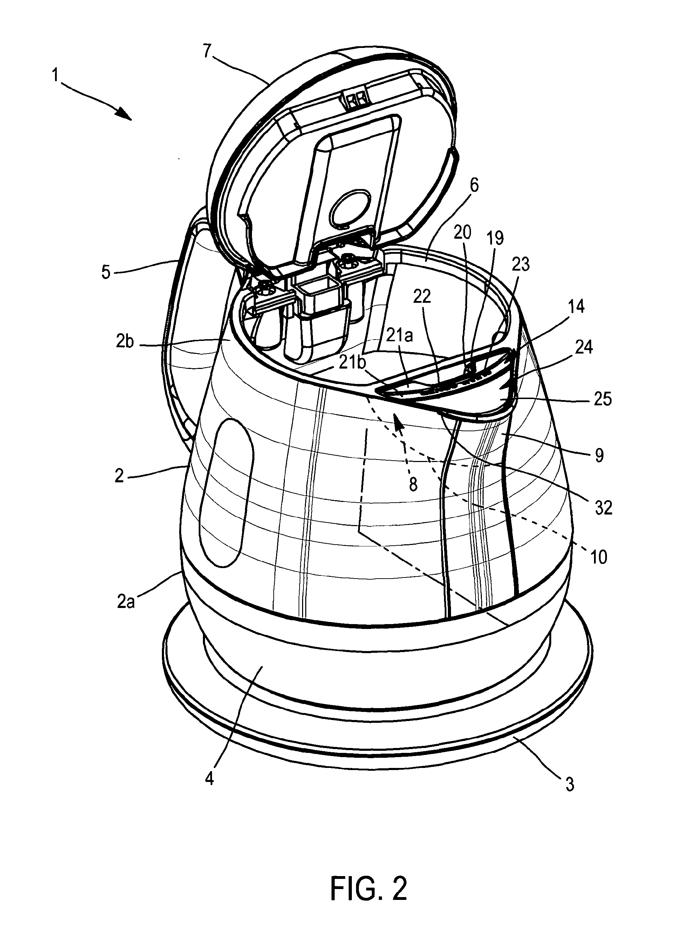

Tel qu'illustré sur les figures 1 et 2, la bouilloire 1 comprend un corps 2 et un socle 3 d'alimentation électrique, le corps 2 étant configuré pour s'embrocher sur le socle 3 en sorte de permettre l'alimentation électrique d'un dispositif de chauffe (non illustré) agencé à l'intérieur d'un boîtier 4 constituant la partie inférieure 2a du corps 2. Le corps 2 comprend une poignée de manipulation 5 permettant de saisir et de soulever le corps 2 pour le versement de l'eau chaude ou le remplissage en eau dudit corps 2. La partie supérieure 2b du corps 2 comprend une ouverture principale 6 qui permet le remplissage en eau du corps 2. Cette ouverture principale 6 est fermée par un couvercle 7 qui est articulé en liaison pivot sur la partie supérieure 2b du corps 2. Le corps 2 comprend une seconde ouverture 8 agencé sur son contour supérieur, qui est prolongée par un bec verseur 9, en sorte de permettre le versement de l'eau chaude lorsque le corps 2 est incliné. Le bec verseur 9 comprend donc un bord intérieur 10 qui délimite cette ouverture 8, comme illustré en trait-tirés sur la figure 1. Ces caractéristiques précitées sont connues de l'homme du métier, diverses variantes étant en outre envisageables, comme par exemple un couvercle 7 qui peut être complètement détaché ou retiré du corps 2.

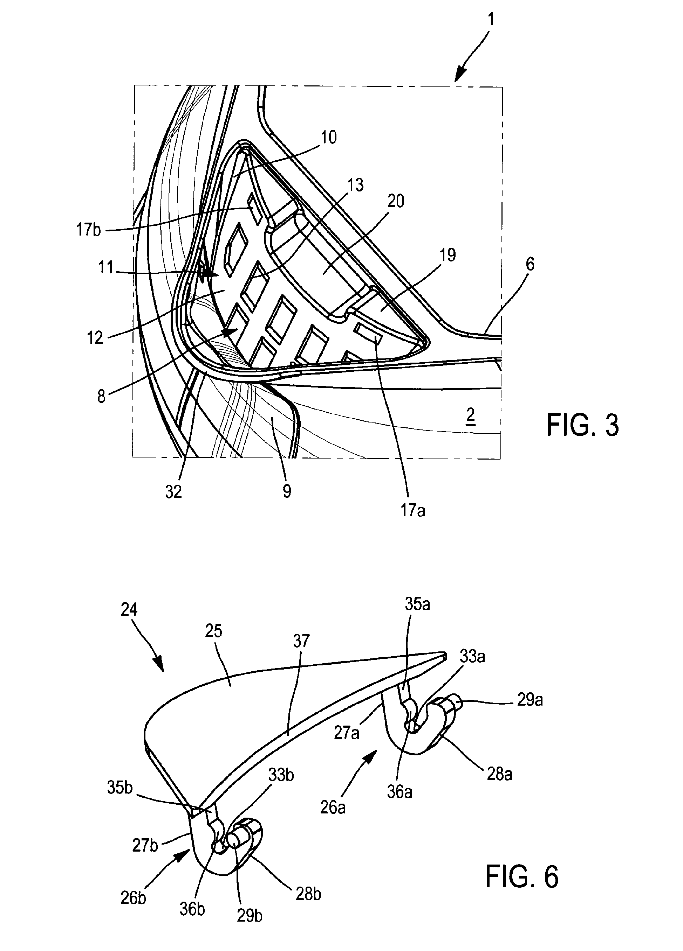

Tel qu'illustré sur les figures 2 et 3, la bouilloire 1 objet de l'invention comprend un support de filtre 11 qui, selon ce mode de réalisation, est directement intégré au corps 2 de ladite bouilloire 1. Pour cela, le corps 2 est réalisé en matière plastique et comprend une paroi 12 agencée dans le plan de l'ouverture 8. Cette paroi 12 est ajourée au moyen de fenêtres 13 ou de trous, en sorte de permettre le passage de l'eau au travers de ladite paroi 12. Cette paroi 12 constitue une face avant du support de filtre 11.

Tel qu'illustré sur les figures 1 à 4, la bouilloire 1 comprend un filtre 14 qui est configuré pour être introduit dans le bec verseur 9 et pour être assemblé avec la paroi 12. Ce filtre comprend une fenêtre 15 munie d'une membrane poreuse 16 permettant de laisser passer l'eau et de retenir le calcaire durant le versement de l'eau chaude. Cette membrane poreuse 16 évite en outre les projections d'eau chaude hors du corps 2, durant l'ébullition de l'eau. Cette fenêtre 15 est disposée en correspondance avec les fenêtres 13 sur la paroi 12, lorsque le filtre 14 est assemblé sur ladite paroi 12. La paroi 12 comprend dans sa partie supérieure 12a, sur ces côtés latéraux, deux encoches 17a, 17b. En outre, la fenêtre 15 du filtre 14 comprend sur sa face interne 15a deux protubérances 18a, 18b qui correspondent avec les encoches 17a, 17b sur la paroi 12 et sont configurées pour s'enclencher dans celles-ci lors du positionnement du filtre 14 en appui contre ladite paroi 12.

Tel qu'illustré sur les figures 1 et 3, le support de filtre 11 comprend une face supérieure 19 qui prolonge la paroi 12 dans sa partie supérieure 12a. Cette face supérieure 19 est également réalisée directement dans la matière du corps, en plastique, et comprend dans sa partie centrale une échancrure 20. Par ailleurs, tel qu'illustré sur les figures 1, 2 et 4, le filtre 14 comprend une face supérieure 21 qui comprend une première portion 21a munie d'un dégagement 22 agencé dans sa partie centrale. Lorsque le filtre 14 est enclenché sur le support de filtre 11, le dégagement 22 correspond avec l'échancrure 20, tel qu'illustré sur les figures 1 et 2. Cela permet à l'utilisateur de saisir le filtre 14 en insérant un de ses doigts dans le dégagement 22 et l'échancrure 20, par le bec verseur 9, puis de tirer sur le filtre 14 pour le déclencher du support de filtre 11 et l'extraire du bec verseur 9.

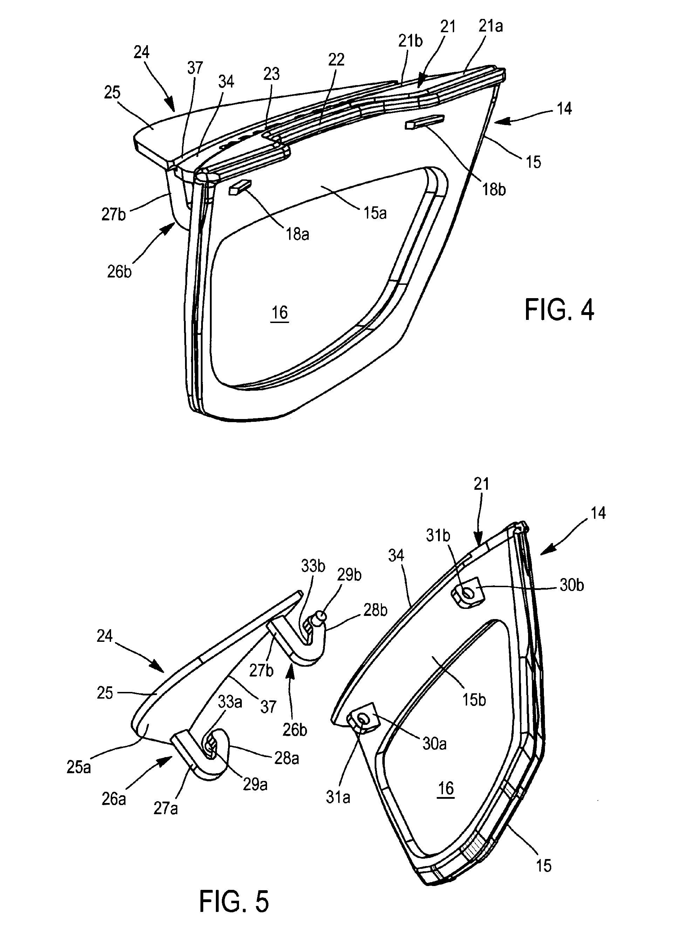

La face supérieure 21 du filtre 14 comprend une seconde portion 21b, tel qu'illustré sur les figures 1 à 3. Lors de la mise en place du couvercle 7 pour la fermeture de l'ouverture principale 6 sur le corps 2, ledit couvercle 7 recouvre intégralement la première portion 21a de la face supérieure 21 du filtre 14, ce qui rend inaccessible le dégagement 22 et empêche donc le retrait du filtre 14. La seconde portion 21b demeure au contraire apparente lorsque le couvercle 7 ferme l'ouverture principale 6 du corps 2, ce qui permet avantageusement de marquer le filtre d'une écriture 23 telle qu'illustrée en figures 1 et 4, par exemple un nom commercial ou une référence du produit.

Tel qu'illustré sur les figures 1, 2, 4 et 5, la bouilloire 1 comprend un clapet 24 qui est monté en liaison pivot directement sur le filtre 14. Pour cela, le clapet 24 comprend une surface plane 25 de laquelle s'étendent, sous sa face inférieure 25a, deux bras incurvés 26a, 26b qui comprennent chacun une portion proximale 27a, 27b et, une portion distale 28a, 28b recourbée par rapport à ladite portion proximale. Les extrémités des portions distales 28a, 28b comprennent chacune un plot 29a, 29b. Les plots 29a, 29b sont disposés sur un même axe et s'étendent à l'opposé l'un par rapport à l'autre, tel qu'illustré en figure 5. La fenêtre 15 du filtre 14 comprend une face externe 15b qui, dans sa partie supérieure, comprend deux pattes 30a, 30b écartées l'une par rapport à l'autre d'une distance correspondant à l'écartement entre les deux bras incurvés 26a, 26b sur le clapet 24. Ces pattes 30a, 30b comprennent chacune un orifice 31a, 31b. Les deux orifices 31a, 31b sont agencés selon un même axe et comprennent un diamètre correspondant au diamètre des plots 29a, 29b. Les bras incurvés 26a, 26b disposent d'une flexibilité suffisante pour permettre l'introduction respective des plots 29a, 29b à l'intérieur des orifices 31a, 31 sur les pattes 30a, 30b, en sorte de réaliser le montage en liaison pivot du clapet 24 sur le filtre 14. Cette flexibilité permet, à l'inverse, de détacher le clapet 24 du filtre 14. Une telle liaison pivot pourrait être réalisée selon des variantes, comme par exemple en disposant en vis-à-vis les deux plots 29a, 29b sur les bras incurvés 26a, 26b ou, en agençant les plots 29a, 29b sur les pattes 30a, 30b et inversement les orifices 31a, 31b sur les extrémités des portions distales 28a, 28b des bras incurvés 26a, 26b.

Tel qu'illustré en figures 1, 2, 4 et 5, la surface plane 25 du clapet 24 est configurée pour épouser convenablement la forme d'un bord supérieur 32 du bec verseur 9 lorsque le clapet 24 ferme ledit bec verseur 9. Cette position de fermeture du bec verseur 9 par le clapet 24 est définie par la butée mise en oeuvre au moyen des portions distales 28a, 28b des bras incurvés 26a, 26b qui viennent en appui contre la partie supérieure de la face externe 15b de la fenêtre 15 du filtre 14, lors du pivotement du clapet 24 par rapport au filtre 14, dans ladite position de fermeture. Ainsi le clapet 24 obture convenablement le bec verseur 9, ce qui réduit de manière optimale l'échappement de vapeur durant l'ébullition de l'eau. Inversement, lors de l'ouverture du clapet 24 sous l'action de la force de l'eau exercée sur la face inférieure 25a de la surface plane 25, durant le versement de l'eau, les parties recourbées 33a, 33b définies entre les portions proximales 27a, 27b et les portions distales 28a, 28b des bras incurvés 26a, 26b, viennent en butée contre un bord 34 de la seconde portion 21b sur le filtre 14. Cela limite l'angle d'ouverture du clapet 24 par rapport au bec verseur 9 durant le versement de l'eau. De préférence, la configuration des bras incurvés 26a, 26b, du bord 34 et des pattes 30a, 30b est choisie de telle sorte que l'angle d'ouverture est limité à une valeur comprise entre 50° et 75°.

Tel qu'illustré en figure 6, dans une variante de cette bouilloire 1, on peut prévoir sur les faces internes 35a, 35b des portions proximales 27a, 27b sur les bras incurvés 26a, 26b, deux nervures 36a, 36b de forme bombée, agencées au-dessus des parties recourbées 33a, 33b. Lors de l'ouverture du clapet 24, ces nervures 36a, 36b interfèrent sur le bord 34 du filtre 14 et constituent un « point dur ». La force exercée par l'eau durant le versement permet toutefois de passer ce « point dur », et ainsi de positionner les nervures 36a, 36b au-dessus du bord 34. Ces nervures 36a, 36b restent ainsi bloquées au-dessus du bord 34, ce qui permet de maintenir la surface plane 25 du clapet 24 en position ouverte par rapport au bec verseur 9, lorsque l'utilisateur redresse le corps 2 de la bouilloire 1, après le versement de l'eau. Cela permet à l'utilisateur d'emplir à nouveau la bouilloire 1 en insérant l'eau directement par le bec verseur 9 qui est resté ouvert. L'utilisateur doit alors rabaisser le clapet 24 manuellement pour assurer la fermeture du bec verseur 9.

Des variantes sont envisageables, sans sortir du cadre de l'invention, pour la mise en oeuvre de moyens de butée limitant la fermeture et/ou l'ouverture du clapet 24 par rapport au bec verseur 9 et pour la mise en oeuvre de moyens de blocage du clapet 24 en position d'ouverture du bec verseur 9. A titre d'exemple, on peut envisager que le bord arrière 37 de la surface plane 25 du clapet 24, illustré en figures 5 et 6, vienne en butée contre le bord 34 de la face supérieure 21 du filtre 14 lors du pivotement du clapet 24 en position de fermeture du bec verseur, ce qui limite ledit pivotement et définit précisément ladite position de fermeture.

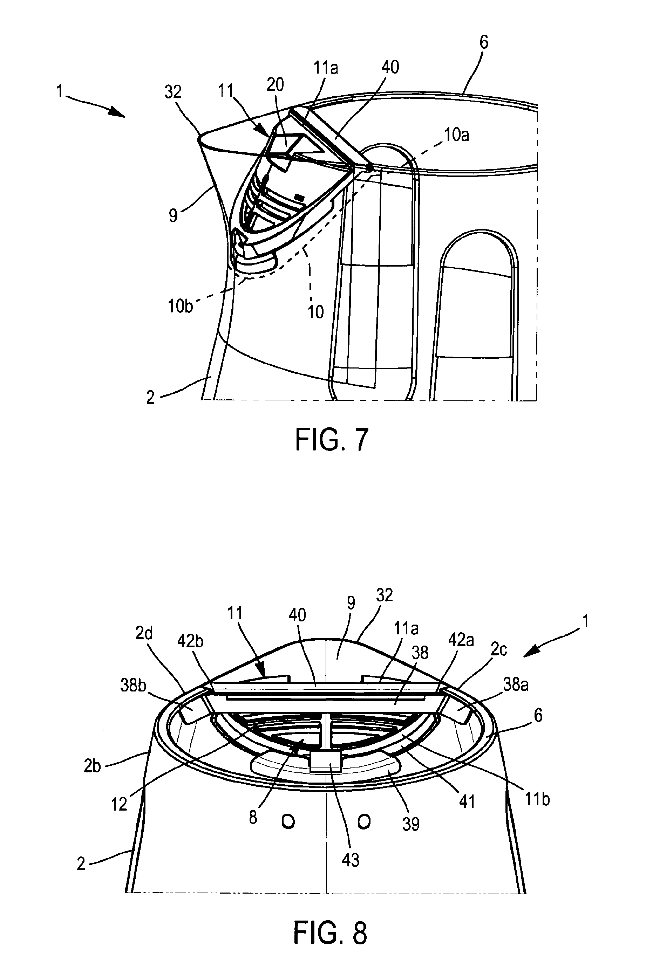

Des variantes de conceptions de bouilloires 1 sont envisageables sans sortir du cadre de l'invention. Ainsi, sur les figures 7 et 8 est illustrée une variante de bouilloire 1 qui reprend, de préférence, toutes les caractéristiques décrites précédemment en regard des figures 1 à 6, à l'exception du support de filtre 11 qui est indépendant du corps 2 de la bouilloire 1 et est assemblé sur ledit corps 2. Cette conception présente pour avantage de pouvoir réaliser la bouilloire 1 dans différentes matières et, notamment, de concevoir un corps 2 en métal. Tel que décrit précédemment, on retrouve sur la figure 7 un bord intérieur 10 du bec verseur 9 qui délimite l'ouverture 8 sur le corps 2 de la bouilloire 1. Tel qu'illustré en figure 8, une barre de maintien 38 est fixée transversalement sur le corps 2, au niveau de deux parties latérales 2c, 2d définies en partie supérieure 10a du bord intérieur 10 du bec verseur 9. Cette barre de maintien 38 peut, par exemple, être réalisée en métal et soudée au niveau de ses extrémités 38a, 38b, à l'intérieur du corps 2 en métal. Sur la figure 8, est illustrée une pièce de maintien 39 qui est agencée dans une partie centrale 2e du corps 2, au niveau de la partie inférieure 10b du bord interne 10 sur le bec verseur 9. Cette pièce de maintien 39 peut également être en métal et soudée à l'intérieur du corps 2, voire en plastique et collée à l'intérieur du corps 2. Tel qu'illustré en figures 7 et 8, le support de filtre 11 comprend dans sa partie supérieure 11a un renfort transversal 40 qui repose sur la barre de maintien 38 lors de la mise en place du support de filtre 11 dans le bec verseur 9, sur le corps 2. De même, le support de filtre 11 comprend dans sa partie inférieure 11b un renfort circulaire 41 qui épouse la forme du bord intérieur 10 du bec verseur et vient en appui contre la pièce de maintien 39. Le renfort transversal 40 comprend sur ses côtés latéraux deux pattes de fixations 42a, 42b configurées pour être engagées sur l'épaisseur de la barre de maintien 38. De même, le renfort circulaire 41 comprend dans sa partie centrale une patte de fixation 43 configurée pour être engagée dans l'épaisseur de la pièce de maintien 39. Cette conception permet d'assembler de manière amovible le support de filtre 11 sur le corps 2.

On remarque également sur ces figures 7 et 8, la présence d'une paroi 12 ajourée et d'une échancrure 20, tel que cela a été décrit précédemment pour les figures 1 à 6. Toutes les autres caractéristiques déjà décrites pour les figures 1 à 6, voire des variantes, étant également envisageables sur ce mode de conception illustré en figures 7 et 8.

## Revendications

1. Bouilloire (1) comprenant :
a) un corps (2) muni d'une ouverture (8) configurée pour au moins verser de l'eau hors du corps et d'un bec verseur (9) configuré pour prolonger l'ouverture vers l'extérieur du corps et faciliter le versement de l'eau ;
b) un support de filtre (11) agencé au niveau de l'ouverture et un filtre (14) amovible pouvant être positionné devant l'ouverture,
**caractérisée en ce que** la bouilloire comprend un clapet (24) agencé sur le filtre, des moyens de liaison (29a, 29b, 31a, 31b) étant agencés entre le clapet et le filtre, lesdits moyens de liaison étant configurés pour permettre le déplacement du clapet par rapport au filtre entre une position d'ouverture du bec verseur et une position de fermeture du bec verseur et, réciproquement, entre une position de fermeture du bec verseur et une position d'ouverture du bec verseur.

2. Bouilloire (1) selon la revendication 1, dans laquelle des moyens d'assemblage amovibles (17a, 17b, 18a, 18b) sont agencés entre le support de filtre (11) et le filtre (14).

3. Bouilloire (1) selon l'une quelconque des revendications 1 à 2, dans laquelle une liaison pivot est agencée entre le clapet (24) et le filtre (14) et est configurée pour pivoter le clapet par rapport au filtre dans la position d'ouverture du bec verseur (9) et réciproquement dans la position de fermeture du bec verseur.

4. Bouilloire (1) selon l'une quelconque des revendications 1 à 3, dans laquelle le support de filtre (11) comporte une paroi ajourée (12) qui est intégrée au corps (2) et disposée au niveau de l'ouverture (8).

5. Bouilloire (1) selon la revendication 4, dans laquelle les moyens d'assemblage amovibles comprennent des encoches (17a, 17b) agencées en une partie supérieure (12a) de la paroi ajourée (12) et, des pattes de fixation (18a, 18b) agencées sur le filtre (14), lesdites pattes de fixation étant configurées pour s'enclencher dans les encoches lorsque le filtre est positionné dans le bec verseur (9) et plaqué contre ladite paroi ajourée et, inversement, se déclencher des encoches lorsque le filtre est extrait du bec verseur.

6. Bouilloire (1) selon l'une quelconque des revendications 1 à 3, dans laquelle le bec verseur (9) comprend un bord intérieur (10) délimitant l'ouverture (8), un système d'assemblage (38, 39, 42a, 42b, 43) étant agencé entre le bord intérieur et le support de filtre (11).

7. Bouilloire (1) selon la revendication 6, dans laquelle le système d'assemblage comprend une barre de maintien (38) fixée transversalement en partie supérieure (10a) du bord intérieur (10) et, une pièce de maintien (39) fixée en partie inférieure (10b) du bord intérieur, des pattes de fixation (42a, 42b, 43) étant agencées en partie supérieure (11a) et en partie inférieure (11b) du support de filtre (11) et configurées pour s'engager respectivement sur la barre de maintien et sur la pièce de maintien.

8. Bouilloire (1) selon l'une quelconque des revendications 6 à 7, dans laquelle les moyens d'assemblage amovibles comprennent des encoches (17a, 17b) agencées sur le support de filtre (11) et des pattes de fixation (18a, 18b) agencées sur le filtre (14), les pattes de fixation étant configurées pour s'enclencher dans les encoches lorsque le filtre est positionné dans le bec verseur (9) et plaqué contre ledit support de filtre et, inversement, pour se dégager des encoches lorsque le filtre est extrait du bec verseur.

9. Bouilloire (1) selon l'une quelconque des revendications 3 à 8, dans laquelle la liaison pivot comprend deux pattes (30a, 30b) agencées sur le filtre (6) et deux bras incurvés (26a, 26b) agencés sur le clapet (24), les pattes comprenant chacune un orifice (31a, 31b) et les extrémités des bras incurvés comprenant chacune un plot (29a, 29b) configuré pour s'engager dans l'orifice respectif.

10. Bouilloire (1) selon l'une quelconque des revendications 1 à 9, laquelle comprend des premiers moyens de butée (15b, 28a, 28b) agencés entre le clapet (24) et le filtre (14) et, configurés pour arrêter la position de fermeture du clapet vis-à-vis du bec verseur (9).

11. Bouilloire (1) selon l'une quelconque des revendications 1 à 10, laquelle comprend des seconds moyens de butée (33a, 33b, 34) agencés entre le clapet (24) et le filtre (14) et configurés pour limiter l'angle d'ouverture entre le clapet et le bec verseur (9).

12. Bouilloire (1) selon l'une quelconque des revendications 3 à 11, dans laquelle la liaison pivot permet un angle d'ouverture entre le clapet (24) et le bec verseur (9) qui est limité à une valeur comprise entre 60° et 85°.

13. Bouilloire (1) selon l'une quelconque des revendications 3 à 12, laquelle comprend des moyens de blocage (34, 36a, 36b) agencés entre le clapet (24) et le filtre (14) et configurés pour maintenir le clapet en position d'ouverture maximale après versement du corps (2).

14. Bouilloire (1) selon la revendication 13, dans laquelle les moyens de blocage comprennent, d'une part, des nervures (36a,36b) agencées sur des bras incurvés (26a, 26b) du clapet (24) et, d'autre part, un bord (34) du filtre (14), les nervures étant configurées pour passer un «point dur» causé par le contact de ces nervures sur le bord en fin d'ouverture du clapet puis pour rester bloquées sur ledit bord, le déblocage étant réalisé manuellement en appliquant une force sur le clapet dans le sens de fermeture.

15. Bouilloire (1) selon l'une quelconque des revendications 1 à 14, dans laquelle des moyens de dégagement (20, 22) sont agencés entre le filtre (14) et le support de filtre (11) et configurés pour saisir le filtre en position sur le support de filtre en sorte de faciliter l'extraction dudit filtre hors du bec verseur (9).

16. Bouilloire (1) selon la revendication 15, laquelle comprend un couvercle (7) d'ouverture/de fermeture d'une ouverture principale (6) agencée en partie supérieure (2a) du corps (2), les moyens de dégagement (20, 22) étant agencés pour être inaccessibles lorsque le couvercle est fermé.

17. Bouilloire selon l'une quelconque des revendications 1 à 16, dans laquelle les moyens de liaison (26a, 26b) sont configurés pour assembler de manière amovible le clapet (24) sur le filtre (14).

18. Ensemble constitué d'une bouilloire (1) selon l'une des revendications 1 à 17, ledit ensemble comprenant en outre un filtre (14) sans clapet (24) configuré également pour être assemblé de manière amovible sur le support de filtre (11).

## Patentansprüche

1. Wasserkocher (1), der Folgendes umfasst:
a) ein Kochgefäß (2), das mit einer Öffnung (8), die dafür ausgelegt ist, zumindest Wasser aus dem Kochgefäß zu gießen, und einer Ausgusstülle (9) ausgestattet ist, die dafür ausgelegt ist, die Öffnung zur Außenseite des Kochgefäßes fortzusetzen und das Ausgießen des Wassers zu erleichtern;
b) einen Filterhalter (11), der sich an der Öffnung befindet, und einen herausnehmbaren Filter (14), der vor der Öffnung positioniert werden kann,
**dadurch gekennzeichnet, dass** der Wasserkocher eine auf dem Filter angeordnete Klappe (24) umfasst, wobei zwischen der Klappe und dem Filter Verbindungsmittel (29a, 29b, 31a, 31b) angeordnet sind, wobei die genannten Verbindungsmittel dafür ausgelegt sind, die Bewegung der Klappe in Bezug auf den Filter zwischen einer Öffnungsstellung der Ausgusstülle und einer Schließstellung der Ausgusstülle und umgekehrt zwischen einer Schließstellung der Ausgusstülle und einer Öffnungsstellung der Ausgusstülle zu gestatten.

2. Wasserkocher (1) nach Anspruch 1, wobei die abnehmbaren Montagemittel (17a, 17b, 18a, 18b) zwischen dem Filterhalter (11) und dem Filter (14) angeordnet sind.

3. Wasserkocher (1) nach einem der Ansprüche 1 bis 2, wobei zwischen der Klappe (24) und dem Filter (14) eine Schwenkverbindung angeordnet ist, die dafür ausgelegt ist, die Klappe in Bezug auf den Filter in die Öffnungsstellung der Ausgusstülle (9) und umgekehrt in die Schließstellung der Ausgusstülle zu schwenken.

4. Wasserkocher (1) nach einem der Ansprüche 1 bis 3, wobei der Filterhalter (11) eine Wand (12) mit Durchbrüchen aufweist, die in das Kochgefäß (2) integriert ist und sich im Bereich der Öffnung (8) befindet.

5. Wasserkocher (1) nach Anspruch 4, wobei die abnehmbaren Montagemittel Aussparungen (17a, 17b), die sich im oberen Teil (12a) der Wand (12) mit Durchbrüchen befinden, und Befestigungslaschen (18a, 18b) umfassen, die sich am Filter (14) befinden, wobei die genannten Befestigungslaschen dafür ausgelegt sind, in die Aussparungen einzurasten, wenn der Filter in der Ausgusstülle (9) platziert und gegen die genannte Wand mit Durchbrüchen gedrückt wird, und sich umgekehrt aus den Aussparungen zu lösen, wenn der Filter aus der Ausgusstülle entnommen wird.

6. Wasserkocher (1) nach einem der Ansprüche 1 bis 3, wobei die Ausgusstülle (9) einen inneren Rand (10) umfasst, der die Öffnung (8) begrenzt, wobei ein Montagesystem (38, 39, 42a, 42b, 43) zwischen dem inneren Rand und dem Filterhalter (11) angeordnet ist.

7. Wasserkocher (1) nach Anspruch 6, wobei das Montagesystem eine Halteleiste (38), die quer liegend am oberen Teil (10a) des inneren Randes (10) befestigt ist, und ein Halteelement (39) umfasst, das am unteren Teil (10b) des inneren Randes befestigt ist, wobei die Befestigungslaschen (42a, 42b, 43) am oberen Teil (11a) und am unteren Teil (11 b) des Filterhalters (11) angeordnet und dafür ausgelegt sind, mit der Halteleiste bzw. dem Halteelement in Eingriff zu kommen.

8. Wasserkocher (1) nach einem der Ansprüche 6 bis 7, wobei die abnehmbaren Montagemittel Aussparungen (17a, 17b), die sich am Filterhalter (11) befinden, und Befestigungslaschen (18a, 18b) umfassen, die sich am Filter (14) befinden, wobei die Befestigungslaschen dafür ausgelegt sind, in die Aussparungen einzurasten, wenn der Filter in der Ausgusstülle (9) platziert ist und gegen den genannten Filterhalter gedrückt wird, und sich umgekehrt aus den Aussparungen zu lösen, wenn der Filter aus der Ausgusstülle entnommen wird.

9. Wasserkocher (1) nach einem der Ansprüche 3 bis 8, wobei die Schwenkverbindung zwei Laschen (30a, 30b), die sich am Filter (6) befinden, und zwei gekrümmte Arme (26a, 26b) umfasst, die sich an der Klappe (24) befinden, wobei die Laschen jeweils eine Öffnung (31 a, 31 b) und die Enden der gekrümmten Arme jeweils einen Zapfen (29a, 29b) aufweisen, der dafür ausgelegt ist, in die entsprechende Öffnung einzugreifen.

10. Wasserkocher (1) nach einem der Ansprüche 1 bis 9, der erste Anschlagmittel (15b, 28a, 28b) umfasst, die zwischen der Klappe (24) und dem Filter (14) angeordnet und dafür ausgelegt sind, die Schließstellung der Klappe in Bezug auf die Ausgusstülle (9) festzulegen.

11. Wasserkocher (1) nach einem der Ansprüche 1 bis 10, der zweite Anschlagmittel (33a, 33b, 34) umfasst, die zwischen der Klappe (24) und dem Filter (14) angeordnet und dafür ausgelegt sind, den Öffnungswinkel zwischen der Klappe und der Ausgusstülle (9) zu begrenzen.

12. Wasserkocher (1) nach einem der Ansprüche 3 bis 11, wobei die Schwenkverbindung einen Öffnungswinkel zwischen der Klappe (24) und der Ausgusstülle (9) ermöglicht, der auf einen Wert zwischen 60° und 85° begrenzt ist.

13. Wasserkocher (1) nach einem der Ansprüche 3 bis 12, der Arretiermittel (34, 36a, 36b) umfasst, die zwischen der Klappe (24) und dem Filter (14) angeordnet und dafür ausgelegt sind, die Klappe nach Ausgießen des Kochgefäßes (2) in maximal geöffneter Stellung zu halten.

14. Wasserkocher (1) nach Anspruch 13, wobei die Arretiermittel einerseits Rippen (36a,36b), die sich an den gekrümmten Armen (26a, 26b) der Klappe (24) befinden, und andererseits einen Rand (34) des Filters (14) umfassen, wobei die Rippen dafür ausgelegt sind, über einen Widerstand hinwegzugehen, der durch den Kontakt dieser Rippen mit dem Rand am Ende des Öffnungsvorgangs der Klappe verursacht wird, und anschließend auf dem genannten Rand arretiert zu werden, wobei das Lösen manuell durch Anwenden einer Kraft auf die Klappe in Schließrichtung erfolgt.

15. Wasserkocher (1) nach einem der Ansprüche 1 bis 14, wobei sich zwischen dem Filter (14) und dem Filterhalter (11) Mittel (20, 22) zum Lösen befinden, die dafür ausgelegt sind, den im Filterhalter sitzenden Filter zu greifen, um das Herausnehmen des genannten Filters aus der Ausgusstülle (9) zu erleichtern.

16. Wasserkocher (1) nach Anspruch 15, der einen Deckel (7) zum Öffnen bzw. Verschließen einer Hauptöffnung (6) im oberen Teil (2a) des Kochgefäßes (2) umfasst, wobei die Mittel (20, 22) zum Lösen so angeordnet sind, dass sie nicht zugänglich sind, wenn der Deckel geschlossen ist.

17. Wasserkocher nach einem der Ansprüche 1 bis 16, wobei die Verbindungsmittel (26a, 26b) dafür ausgelegt sind, die Klappe (24) abnehmbar am Filter (14) anzubringen.

18. Anordnung bestehend aus einem Wasserkocher (1) nach einem der Ansprüche 1 bis 17, wobei die genannte Anordnung außerdem einen Filter (14) ohne Klappe (24) umfasst, der ebenfalls dafür ausgelegt ist, abnehmbar am Filterhalter (11) angebracht zu werden.

## Claims

1. Kettle(1) comprising:
a) a body (2) having an opening (8) configured to at least pour water from the body and a spout (9) configured to extend the opening towards the outside of the body and pour the water more easily;
b) a filter support (11) arranged at the opening and a removable filter (14) which can be positioned in front of the opening,
**characterised in that** the kettle comprises a valve (24) arranged on the filter, connection means (29a, 29b, 31 a, 31 b) being arranged between the valve and the filter, said connection means being configured to allow movement of the valve relative to the filter between an open position of the spout and a closed position of the spout, and vice versa between a closed position of the spout and an open position of the spout.

2. Kettle (1) according to claim 1, wherein removable assembly means (17a, 17b, 18a, 18b) are arranged between the filter support (11) and the filter (14).

3. Kettle (1) according to claim 1 to 2, wherein a pivot link is arranged between the valve (24) and the filter (14) and is configured to pivot the valve relative to the filter in the open position of the spout (9) and vice versa in the closed position of the spout.

4. Kettle (1) according to any one of claims 1 to 3, wherein the filter support (11) comprises a perforated wall (12) which is integrated into the body (2) and arranged at the opening (8).

5. Kettle (1) according to claim 4, wherein the removable assembly means comprise notches (17a, 17b) arranged in an upper part (12a) of the perforated wall (12) and attachment lugs (18a, 18b) arranged on the filter (14), said attachment lugs being configured to engage in the notches when the filter is positioned in the spout (9) and pressed against said perforated wall and, inversely, to disengage from the notches when the filter is extracted from the spout.

6. Kettle (1) according to any one of claims 1 to 3, wherein the spout (9) comprises an inner edge (10) delimiting the opening (8), an assembly system (38, 39, 42a, 42b, 43) being arranged between the inner edge and the filter support (11).

7. Kettle (1) according to claim 6, wherein the assembly system comprises a retaining bar (38) attached transversely in the upper part (10a) of the inner edge (10) and a retaining part (39) attached in the lower part (10b) of the inner edge, attachment lugs (42a, 42b, 43) being arranged in the upper part (11 a) and in the lower part (11 b) of the filter support (11) and configured to engage respectively on the retaining bar and on the retaining part.

8. Kettle (1) according to claim 6 or 7, wherein the removable assembly means comprise notches (17a, 17b) arranged on the filter support (11) and attachment lugs (18a, 18b) arranged on the filter (14), the attachment lugs being configured to engage in the notches when the filter is positioned in the spout (9) and pressed against said filter support and, inversely, to disengage from the notches when the filter is extracted from the spout.

9. Kettle (1) according to any one of claims 3 to 8, wherein the pivot link comprises two lugs (30a, 30b) arranged on the filter (6) and two curved arms (26a, 26b) arranged on the valve (24), the lugs each comprising a hole (31 a, 31 b) and the ends of the curved arms each comprising a stud (29a, 29b) configured to engage in the respective hole.

10. Kettle (1) according to any one of claims 1 to 9, which comprises first stop means (15b, 28a, 28b) arranged between the valve (24) and the filter (14) and configured to stop the valve closed position with respect to the spout (9).

11. Kettle (1) according to any one of claims 1 to 10, which comprises second stop means (33a, 33b, 34) arranged between the valve (24) and the filter (14) and configured to limit the opening angle between the valve and the spout (9).

12. Kettle (1) according to any one of claims 3 to 11, wherein the pivot link allows an opening angle between the valve (24) and the spout (9) which is limited to a value of between 60° and 85°.

13. Kettle (1) according to any one of claims 3 to 12, which comprises blocking means (34, 36a, 36b) arranged between the valve (24) and the filter (14) and configured to maintain the valve in maximum opening position after pouring from the body (2).

14. Kettle (1) according to claim 13, wherein the blocking means comprise firstly ribs (36a, 36b) arranged on curved arm (26a, 26b) of the valve (24) and, secondly, an edge (34) of the filter (14), the ribs being configured to pass a "hard point" caused by the contact of these ribs on the edge at the end of valve opening then, to remain blocked on said edge, unblocking being performed manually by applying a force on the valve in the closing direction.

15. Kettle (1) according to any one of claims 1 to 14, wherein the disengagement means (20, 22) are arranged between the filter (14) and the filter support (11) and configured to hold the filter in position on the filter support so that it is easier to extract the filter from the spout (9).

16. Kettle (1) according to claim 15, which comprises a lid (7) to open/close a main opening (6) arranged in the upper part (2a) of the body (2), the disengagement means (20, 22) being arranged to be inaccessible when the lid is closed.

17. Kettle according to any one of claims 1 to 16, wherein the connection means (26a, 26b) are configured to removably assemble the valve (24) on the filter (14).

18. Assembly consisting of a kettle (1) according to one of claims 1 to 17, said assembly further comprising a filter (14) without valve (24) also configured to be removably assembled on the filter support (11).
